# DEMANDE DE BREVET EUROPEEN

(11) **EP 0 972 557 A1**
(43) Date de publication de la demande: **19.01.2000**
(21) Numéro de dépôt: 99401169.0
(22) Date de dépôt: 12.05.1999
(51) Int. Cl.: B01D 53/22

(54) **Dispositif de fourniture d'un gaz épuré à une installation purgée avec ce gaz épuré**

(30) Priorité: 28.05.1998 FR 9806721
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Chevalier, Gilbert, 78960 Voisins le Bretonneux (FR); Dupont, Pascal, 78140 Velizy Villacoublay (FR)
(74) Mandataire: Vesin, Jacques

(57) **Abrégé**

L'invention concerne un dispositif (1) de fourniture d'un gaz épuré à une installation (3) purgée avec ce gaz épuré, comprenant une conduite d'alimentation (5) reliée d'une part à une source (7) dudit gaz pratiquement pur et d'autre part à une entrée de ladite installation (3), ledit gaz épuré étant contaminé d'impuretés lors du passage dans ladite installa-tion (3). Le dispositif comprend en outre une conduite de récupération (9) dudit gaz contaminé en sortie de ladite installation (3), raccordée à la conduite d'alimentation (5) et, disposés l'un après l'autre en aval du raccordement de ladite conduite de récupération (9) à la conduite d'alimentation (5), un compresseur (11) et des moyens (13) de séparation par perméation des impuretés dudit gaz contaminé pour fournir un gaz épuré à ladite installation (3).

## Description

L'invention est relative à un dispositif de fourniture d'un gaz épuré à une installation purgée avec ce gaz épuré, comprenant une conduite d'alimentation reliée d'une part à une source dudit gaz épuré et d'autre part à une entrée de ladite installation.

De nombreuses installations par exemple dans la fabrication de composants électroniques nécessitent l'utilisation d'atmosphères filtrées et inertes.

Ainsi par exemple, le stockage de plaquettes de silicium destinées à porter des circuits micro-électroniques est effectué dans une enceinte avec une atmosphère d'azote qui ne présente que quelques ppm d'impuretés constitués notamment d'oxygène. Un exemple pour le stockage et transport de plaquettes (« wafer ») est décrit dans USP 5,644,855.

Etant donné que le gaz épuré est contaminé progressivement d'impuretés, on est contraint de renouveler l'atmosphère d'azote dans l'enceinte au fur et à mesure. Ce renouvellement est généralement réalisé en alimentant l'enceinte constamment avec un certain débit d'azote épuré en provenance d'une source de gaz épuré et en évacuant l'azote contaminé.

Cependant le coût de l'azote épuré est très élevé de sorte que le renouvellement de l'atmosphère inerte dans l'enceinte de stockage constitue un poste important dans ses coûts d'exploitation.

De plus, ces installations connues présentent en outre l'inconvénient qu'en cas de défaillance de la source du gaz épuré, c'est toute l'installation purgée qui s'en trouve affectée, ce qui, pour l'exemple précité, peut conduire à la mise au rebut de toutes les plaquettes de silicium stockées.

Des systèmes de séparation de gaz par membrane, applicables à l'électronique ou autres domaines sont connus notamment de EP-A-754 487 ainsi que de USP 5308382, 5240471, 5290341, 5378439 et 5383957.

L'invention vise à pallier ces divers inconvénients en proposant un dispositif de fourniture de gaz épuré, notamment de l'azote, à une installation comme par exemple une enceinte de stockage de plaquettes pour la micro-électronique qui permette d'une part de réduire le coût d'exploitation d'une telle installation et d'autre part, d'assurer une certaine autonomie à l'installation vis-à-vis de la source.

A cet effet, l'invention a pour objet un dispositif de fourniture d'un gaz épuré à une installation purgée avec ce gaz épuré, comprenant une conduite d'alimentation reliée d'une part à une source dudit gaz pratiquement pur et d'autre part à une entrée de ladite installation, ledit gaz épuré étant contaminé d'impuretés lors du passage dans ladite installation, caractérisé en ce qu'il comprend en outre une conduite de récupération dudit gaz contaminé en sortie de ladite installation, raccordée à la conduite d'alimentation et, disposés l'un après l'autre en aval du raccordement de ladite conduite de récupération à la conduite d'alimentation, un compresseur et des moyens de séparation par perméation des impuretés dudit gaz contaminé pour fournir un gaz épuré à ladite installation.

Le dispositif selon l'invention peut de plus comporter une ou plusieurs des caractéristiques suivantes :
- le perméat obtenu par lesdits moyens de séparation est principalement constitué d'impuretés,
- le perméat obtenu par lesdits moyens de séparation est principalement constitué dudit gaz épuré,
- les moyens de séparation comprennent, disposés en série, un premier et un second perméateurs, le perméat de l'un des perméateurs étant principalement constitué d'impuretés dont la vitesse de perméation est supérieure à celle dudit gaz épuré à fournir à l'installation et le perméat de l'autre étant principalement constitué dudit gaz épuré,
- les moyens de séparation comprennent pour chaque perméateur une conduite d'évacuation des impuretés, et une vanne disposée dans cette conduite d'évacuation des impuretés et commandée par des moyens de détection du niveau résiduel d'impuretés dans le gaz épuré en sortie dudit perméateur,
- il comprend en outre, disposés dans la conduite d'alimentation en amont du raccordement de ladite conduite de récupération à la conduite d'alimentation, des moyens de stockage tampon dudit gaz pratiquement pur,
- lesdits moyens de stockage tampon comprennent un réservoir de stockage dudit gaz pur sous pression, un clapet anti-retour disposé dans la conduite d'alimentation en amont du réservoir de stockage, et une vanne de régulation disposée dans la conduite d'alimentation en aval du réservoir de stockage et pilotée par la pression du gaz contaminé en sortie de ladite installation.

D'autres caractéristiques et avantages de l'invention ressortiront de la description suivante, donnée à titre d'exemple, sans caractère limitatif, en regard des dessins annexés sur lesquels :
La figure 1 est un schéma d'un premier exemple de réalisation d'un dispositif selon l'invention,
La figure 2 est un schéma d'un deuxième exemple de réalisation d'un dispositif selon l'invention, et
La figure 3 est un schéma d'un troisième exemple de réalisation d'un dispositif selon l'invention.

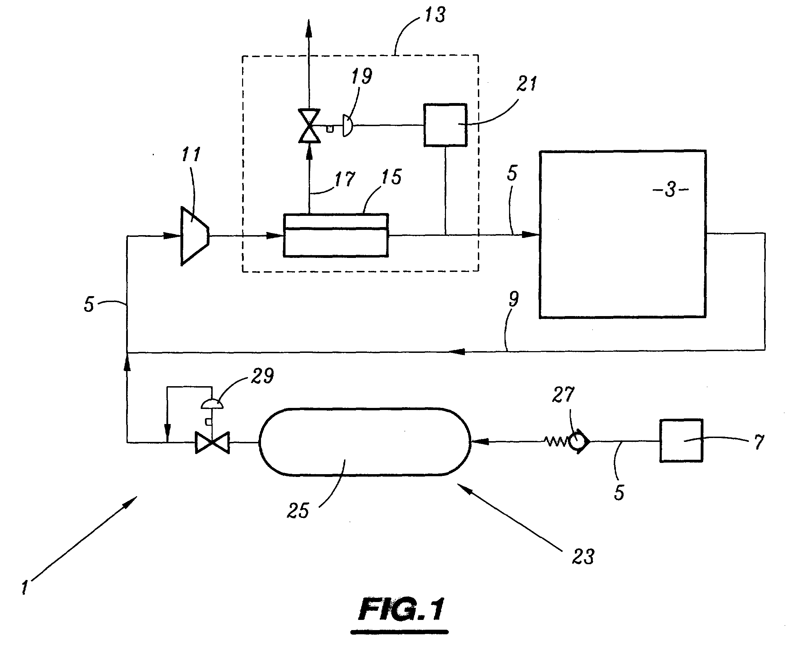

Sur la figure 1 est représenté un schéma d'un premier exemple de réalisation d'un dispositif 1 de fourniture d'un gaz épuré, par exemple de l'azote de haute pureté ne présentant que quelques dizaines de ppm d'impuretés, à une installation 3, telle que par exemple une enceinte de stockage de plaquettes de silicium pour la micro-électronique.

Le dispositif 1 selon l'invention comprend une conduite 5 d'alimentation reliée d'une part à une source 7 dudit gaz pratiquement pur telle qu'un stockage ou une unité de production, et d'autre part à une entrée de l'installation 3.

Le dispositif 1 comprend en outre une conduite 9 de récupération en sortie de l'installation 3 du gaz épuré qui a été contaminé d'impuretés (par exemple O₂, CO₂, H₂ etc... ) lors de son passage dans l'installation 3.

Cette conduite 9 de récupération est raccordée en aval de la source 7 à la conduite d'alimentation 5 pour y introduire le gaz contaminé qui a été récupéré en sortie de l'installation 3.

Entre le raccordement de la conduite 9 à la conduite 5 et l'installation 3 sont disposés en série un compresseur 11 et des moyens 13 de séparation par perméation des impuretés du gaz contaminé.

Le compresseur 11 est avantageusement non lubrifié de sorte qu'il ne pollue pas les gaz qu'il comprime.

Les moyens 13 de séparation comprennent un perméateur 15 dont la membrane est par exemple choisie de telle façon que la vitesse de perméation des impuretés au travers de la membrane est supérieure à celle du gaz épuré à fournir à l'installation, c'est-à-dire de l'azote. Dans ce cas, le perméat obtenu est principalement constitué d'impuretés.

Ce perméat est évacué par l'intermédiaire d'une conduite d'évacuation 17 raccordée à une sortie correspondante du perméateur 15.

Par ailleurs, le dispositif comprend, disposée dans la conduite 17, une vanne 19 de régulation du débit du perméat évacué. Cette vanne 19 est commandée par des moyens 21 de détection du niveau résiduel d'impuretés dans le gaz épuré dans la conduite d'alimentation 5 en sortie du perméateur 15. Les moyens 21 de détection comprennent par exemple un ou plusieurs analyseurs de gaz.

En outre, pour assurer une certaine autonomie du dispositif 1 selon l'invention en cas de défaillance de la source 7 provoquée par exemple par un arrêt de l'installation de production ou par le fait que le stockage est vide, le dispositif comprend des moyens 23 de stockage tampon comprenant un réservoir 25 de stockage du gaz pratiquement pur sous pression, un clapet anti-retour 27 disposé en amont du réservoir 25, ainsi qu'une vanne de régulation 29 pilotée par la pression du gaz contaminé en sortie de l'installation 3.

Le dispositif 1 de la figure 1 fonctionne de la manière suivante.

Lors de son passage dans l'installation 3, le gaz épuré qui a été introduit avec une certaine pression dans l'installation, est détendu. De plus, il est progressivement contaminé d'impuretés et récupéré en sortie par la conduite 9 de récupération.

Par la suite, le gaz contaminé est introduit dans la conduite 5 d'alimentation, est comprimé par le compresseur 11 et passe au travers du perméateur 15.

Si les moyens 21 de détection détectent que le niveau d'impuretés dans le gaz épuré est inférieur à un certain seuil fixé par rapport aux niveaux de pureté acceptés par l'installation 3, ils commandent à la vanne 19 d'être en position de fermeture. Dans ce cas, le perméat n'est pas évacué et il n'y a pas de gaz pur délivré par la source 7 et/ou le réservoir 25 dans la conduite d'alimentation 5 en aval de la vanne 29. Le dispositif fonctionne par conséquent de manière autonome en boucle fermée.

Si les moyens 21 de détection détectent que le niveau d'impuretés dans le gaz épuré dépasse le seuil précité, ils commandent l'ouverture partielle de la vanne 19, cette ouverture partielle étant proportionnelle au dépassement du niveau d'impuretés dans le gaz épuré en sortie du perméateur 15. Dans ce cas, le perméat est évacué et la source 7 et/ou le réservoir 25 assurent l'appoint en gaz pur pour remplacer la quantité de gaz évacuée par la conduite 17. Le dispositif fonctionne par conséquent en boucle partiellement ouverte.

On comprend donc que les moyens 13 de séparation ne sont actifs que si le niveau d'impuretés dans le gaz épuré à fournir à l'installation 3 atteint un certain seuil. Etant donné que le perméat est évacué en fonction du niveau d'impuretés dans le gaz épuré, on peut considérablement réduire la quantité de gaz pur à fournir par la source 7 et/ou le réservoir 25, ce qui conduit à une réduction importante du coût d'exploitation de l'installation 3.

Si parmi les impuretés générées par l'installation 3, il y a une espèce dite "critique", par exemple de l'oxygène, qui est prépondérante, alors on envisage que les moyens 21 sont d'une construction simplifiée et ne détectent que cette espèce critique. Ainsi, le coût du dispositif peut également être réduit.

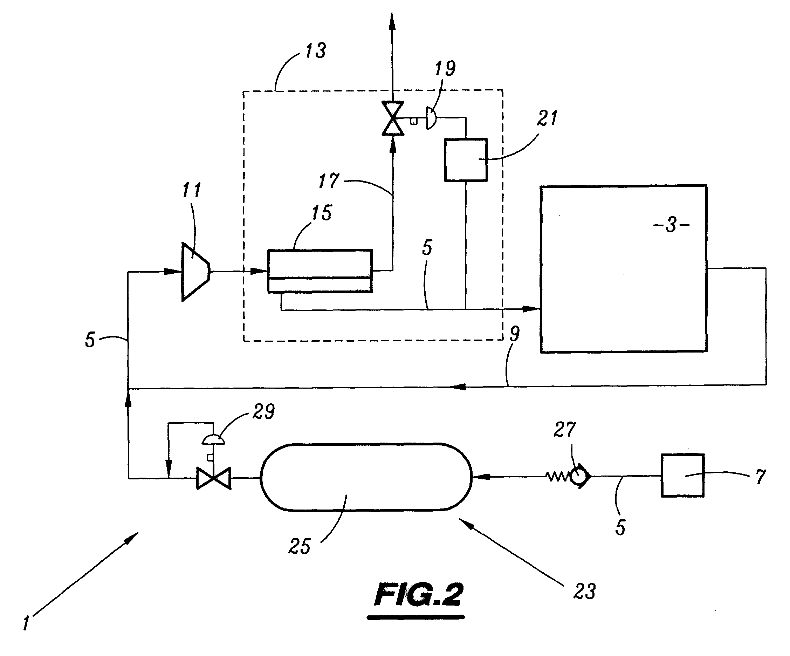

Sur la figure 2 est représenté un second exemple de réalisation du dispositif selon l'invention. Sur cette figure, les éléments identiques à ceux de la figure 1 portent les mêmes numéros de référence.

Le dispositif 1 de cette figure 2 ne se distingue de celui de la figure 1 que par le choix des raccordements de la conduite 17 d'évacuation et de la conduite 5 d'alimentation, et éventuellement par le choix de la membrane du perméateur 15.

En effet, dans cet exemple, la vitesse de perméation des impuretés est inférieure à celle du gaz à fournir à l'installation, c'est-à-dire de l'azote. Dans ce cas, le perméat obtenu en sortie du perméateur est principalement constitué du gaz épuré à fournir à l'installation.

Ce perméat est acheminé par la conduite 5 à l'installation 3 et les impuretés sont évacuées par l'intermédiaire de la conduite d'évacuation 17 raccordée à la sortie dite de « rejet » correspondante du perméateur 15.

Cet exemple de réalisation fonctionne de manière analogue à celle de la figure 1 et permet, dans le cas de l'azote, d'épurer par perméation notamment des hydrocarbures et/ou des gaz fluorés.

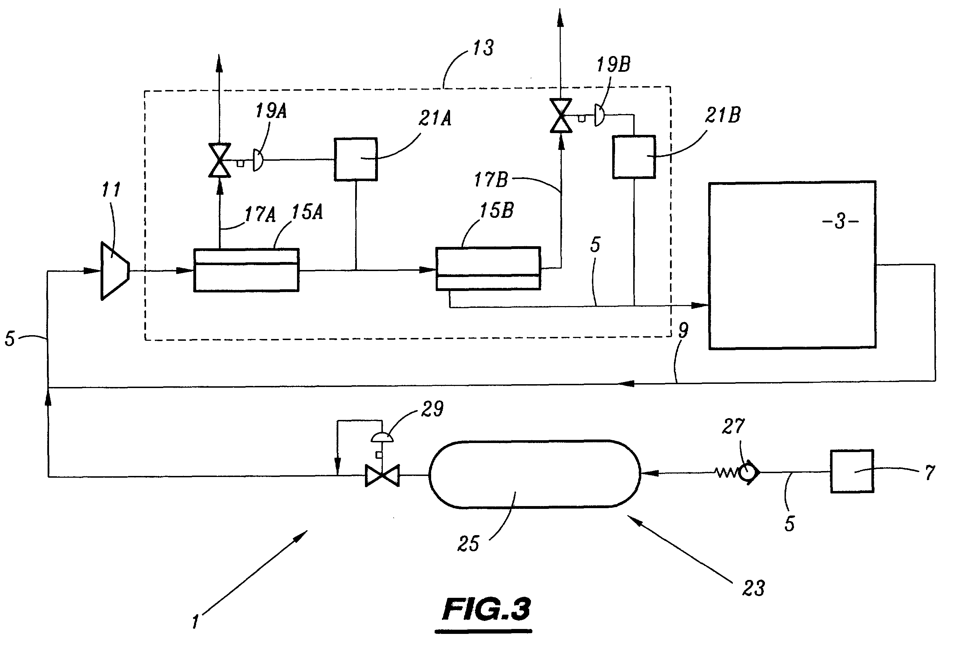

L'exemple de réalisation de la figure 3 est une combinaison des exemples de réalisation des figures 1 et 2. Sur cette figure 3, les éléments identiques à ceux des figures 1 et 2 portent les mêmes numéros de référence, les éléments associés spécifiquement aux modes respectifs de réalisation des figures 1 et 2 se distinguant respectivement par les lettres A et B ajouté au numéro de référence.

En effet, le dispositif 1 de la figure 3 comprend, disposés en série, un premier 15A et un second 15B perméateurs. Le fonctionnement des perméateurs 15A et 15B est identique à celui des perméateurs respectifs représentés sur les figures 1 et 2. Ainsi, le perméat du perméateur 15A est principalement constitué d'impuretés dont la vitesse de perméation et supérieure à celle du gaz épuré et le perméat du perméateur 15B est principalement constitué dudit gaz épuré à fournir à ladite installation 3. Bien entendu, les moyens 21A de détection du niveau d'impuretés en sortie du perméateur 15 A sont adaptés pour détecter des impuretés dont la vitesse de perméation est supérieure à celle du gaz épuré, et les moyens 21B pour détecter des impuretés dont la vitesse de perméation est inférieure à celle du gaz épuré.

Le fonctionnement de ce dispositif combiné est analogue à celui des dispositifs individuels des figures 1 et 2 mis en série.

Ainsi, on peut recycler une partie très importante du gaz contaminé et réduire de manière conséquente le coût d'exploitation de l'installation.

## Revendications

1. Dispositif (1) de fourniture d'un gaz épuré à une installation (3) purgée avec ce gaz épuré, comprenant une conduite d'alimentation (5) reliée d'une part à une source (7) dudit gaz pratiquement pur et d'autre part à une entrée de ladite installation (3), ledit gaz épuré étant contaminé d'impuretés lors du passage dans ladite installation (3), caractérisé en ce qu'il comprend en outre une conduite de récupération (9) dudit gaz contaminé en sortie de ladite installation (3), raccordée à la conduite d'alimentation (5) et, disposés l'un après l'autre en aval du raccordement de ladite conduite de récupération (9) à la conduite d'alimentation (5), un compresseur (11) et des moyens (13) de séparation par perméation des impuretés dudit gaz contaminé pour fournir un gaz épuré à ladite installation (3).

2. Dispositif selon la revendication 1, caractérisé en ce que le perméat obtenu par lesdits moyens (13) de séparation est principalement constitué d'impuretés.

3. Dispositif selon la revendication 1, caractérisé en ce que le perméat obtenu par lesdits moyens (13) de séparation est principalement constitué dudit gaz épuré.

4. Dispositif selon la revendication 1, caractérisé en ce que les moyens (13) de séparation comprennent, disposés en série, un premier (15A) et un second (15B) perméateurs, le perméat de l'un (15A) des perméateurs étant principalement constitué d'impuretés dont la vitesse de perméation est supérieure à celle dudit gaz épuré à fournir à l'installation et le perméat de l'autre (15B) étant principalement constitué dudit gaz épuré.

5. Dispositif selon l'une quelconque des revendications 1 à 4, caractérisé en ce que les moyens (13) de séparation comprennent pour chaque perméateur (15; 15A,15B) une conduite d'évacuation (17; 17A,17B) des impuretés, et une vanne (19 ; 19A,19B) disposée dans cette conduite d'évacuation des impuretés (17; 17A, 17B) et commandée par des moyens de détection (21,21A,21B) du niveau résiduel d'impuretés dans le gaz épuré en sortie dudit perméateur (15, 15A, 15B).

6. Dispositif selon l'une quelconque des revendications 1 à 5, caractérisé en ce qu'il comprend en outre, disposés dans la conduite d'alimentation (5) en amont du raccordement de ladite conduite de récupération (9) à la conduite d'alimentation (5), des moyens (23) de stockage tampon dudit gaz pratiquement pur.

7. Dispositif selon la revendication 6, caractérisé en ce que lesdits moyens (23) de stockage tampon comprennent un réservoir (25) de stockage dudit gaz pur sous pression, un clapet anti-retour (27) disposé dans la conduite d'alimentation en amont du réservoir (25) de stockage, et une vanne de régulation (29) disposée dans la conduite d'alimentation (5) en aval du réservoir (25) de stockage et pilotée par la pression du gaz contaminé en sortie de ladite installation (3).
